# EUROPEAN PATENT APPLICATION

(11) **EP 4 825 828 A1**
(43) Date of publication of application: **21.10.2026**
(21) Application number: 24903352.3
(22) Date of filing: 25.10.2024
(51) Int. Cl.: C04B 35/495, C01G 39/00

(54) **ANTIBACTERIAL AND ANTIVIRAL MATERIAL, GREEN COMPACT, SINTERED BODY, ARTICLE, SLURRY COMPOSITION, AND COATING AGENT**

(30) Priority: 11.12.2023 JP 2023208388
(71) Applicant: Niterra Co., Ltd., Nagoya-shi, Aichi 461-0005 (JP); Institute of Science Tokyo, Tokyo 152-8550 (JP)
(72) Inventor: OKAYAMA, Hiroki, Nagoya-shi, Aichi 461-0005 (JP); IWATA, Masaya, Nagoya-shi, Aichi 461-0005 (JP); NAKAJIMA, Akira, Tokyo 152-8550 (JP)
(74) Representative: Zimmermann & Partner Patentanwälte mbB
(86) International application number: PCT/JP2024/038076
(87) International publication number: WO 2025/126690

(57) **Abstract**

An antibacterial and antiviral material according to the present invention is formed from a Ce-Mo-based composite oxide ceramic containing β-Ce₂Mo₃O₁₃.

## Description

### TECHNICAL FIELD

The present invention relates to an antibacterial and antiviral material, a green compact, a sintered body, an article, a slurry composition, and a coating agent.

### BACKGROUND ART

Inorganic antibacterial and antiviral materials have advantages such as a wide range of temperatures that allow usage thereof and a low likelihood that a virus or the like develops resistance thereto. Thus, research on inorganic antibacterial and antiviral materials has been actively conducted in recent years. As this type of antibacterial and antiviral material, materials based on metals such as Ag and Cu, materials based on photocatalysts such as TiO₂, materials based on metal oxides such as ZnO and CaO, and the like have been reported to date and have been in actual use.

As indicated in Patent Document 1, attention has been paid to composite oxide ceramics that contain cerium (Ce) and molybdenum (Mo) and that have high antibacterial and antiviral activities among inorganic antibacterial and antiviral materials.

### RELATED ART DOCUMENT

Patent Document 1: International Publication WO 2022/014631

### DISCLOSURE OF THE PRESENT INVENTION

### Problem to be Solved by the Invention

Such antibacterial and antiviral materials are sometimes used in a slurry state obtained by dispersing a powdery substance in water or the like, for example. Also, such antibacterial and antiviral materials are sometimes used in an environment in which the antibacterial and antiviral materials easily come into contact with water, such as bathrooms and washstands. In this manner, such antibacterial and antiviral materials are sometimes used for a long period in the presence of water as in the case of coming into contact with water or being immersed in water.

In order to continuously use an antibacterial and antiviral material in the presence of water, the antibacterial and antiviral material needs to have an appropriate level of water resistance, for example. At present, however, the above composite oxide ceramic (e.g., Ce₂Mo₃O₁₃) containing cerium and molybdenum has not been studied in relation to the water resistance thereof at all.

An object of the present invention is to provide products such as an antibacterial and antiviral material formed from a Ce-Mo-based composite oxide ceramic having excellent water resistance.

### Means for Solving the Problem

The present inventors have found that β-type Ce₂Mo₃O₁₃ (β-Ce₂Mo₃O₁₃) is selectively (depending on a condition, specifically) formed by controlling an Al (trace element) content of a raw material powder to be 100 ppm or lower at the time of manufacturing a Ce-Mo-based composite oxide ceramic.

Furthermore, the present inventors have found that the β-Ce₂Mo₃O₁₃ has antibacterial and antiviral activities equivalent to those of γ-type Ce₂Mo₃O₁₃ (γ-Ce₂Mo₃O₁₃) formed from a raw material powder having a high Al content, and is stabler with respect to water than the γ-Ce₂Mo₃O₁₃.

The present inventors conducted thorough studies to achieve the aforementioned object. As a result, the present inventors have found that a Ce-Mo-based composite oxide ceramic containing β-Ce₂Mo₃O₁₃ maintains excellent antibacterial and antiviral activities and has excellent water resistance as described above. Consequently, the present invention has been completed.

The means for solving the above problems are as follows.
<1> An antibacterial and antiviral material formed from a Ce-Mo-based composite oxide ceramic containing β-Ce₂Mo₃O₁₃.
<2> The antibacterial and antiviral material according to <1> above, wherein a proportion of a crystal phase of the β-Ce₂Mo₃O₁₃ in a crystal of the Ce-Mo-based composite oxide ceramic is 32% or higher.
<3> The antibacterial and antiviral material according to <1> or <2> above, wherein the Ce-Mo-based composite oxide ceramic has an Al content of 100 ppm or lower.
<4> A green compact including the Ce-Mo-based composite oxide ceramic according to any one of <1> to <3> above, wherein the Ce-Mo-based composite oxide ceramic is in a form of a powder and has been compacted.
<5> A sintered body including the Ce-Mo-based composite oxide ceramic according to any one of <1> to <3> above, wherein the Ce-Mo-based composite oxide ceramic has been sintered.
<6> An article including, on at least a part of a surface thereof, the antibacterial and antiviral material according to any one of <1> to <3> above.
<7> An article including:
   the antibacterial and antiviral material according to any one of <1> to <3> above; and
   a base material in which the antibacterial and antiviral material has been dispersed.
<8> A slurry composition including:
   the antibacterial and antiviral material according to any one of <1> to <3> above; and
   a dispersion medium.
<9> A coating agent including the slurry composition according to <8> above.

### Advantageous Effect of the Invention

The present invention makes it possible to provide products such as an antibacterial and antiviral material formed from a Ce-Mo-based composite oxide ceramic having excellent water resistance.

### BRIEF DESCRIPTION OF THE DRAWINGS

FIG. 1 shows X-ray diffraction spectra derived from respective samples in Examples 1, 2, 3, and 4 and Comparative Example 1.
FIG. 2 shows a measurement result (X-ray diffraction spectrum) of XRD after immersion in pure water in Example 1.
FIG. 3 shows a measurement result (X-ray diffraction spectrum) of XRD after immersion in pure water in Comparative Example 1.
FIG. 4 shows a measurement result (X-ray diffraction spectrum) of XRD after immersion in pure water in Example 2.
FIG. 5 shows a measurement result (X-ray diffraction spectrum) of XRD after immersion in pure water in Example 3.
FIG. 6 shows a measurement result (X-ray diffraction spectrum) of XRD after immersion in pure water in Example 4.

### BEST MODE FOR CARRYING OUT THE INVENTION

An antibacterial and antiviral material according to an embodiment of the present invention is formed from a Ce-Mo-based composite oxide ceramic containing β-Ce₂Mo₃O₁₃.

The Ce-Mo-based composite oxide ceramic is a composite oxide ceramic containing cerium (Ce) and molybdenum (Mo) and contains Ce₂Mo₃O₁₃ having a β-type crystal structure (β-Ce₂Mo₃O₁₃) as an essential component.

The Ce-Mo-based composite oxide ceramic is preferably composed only of β-Ce₂Mo₃O₁₃. The Ce-Mo-based composite oxide ceramic may contain Ce₂Mo₃O₁₃ having a γ-type crystal structure (γ-Ce₂Mo₃O₁₃) as long as the object of the present invention is achieved.

A proportion of a crystal phase of the β-Ce₂Mo₃O₁₃ in a crystal of the Ce-Mo-based composite oxide ceramic is not particularly limited as long as the object of the present invention is achieved. However, the proportion is preferably, for example, 32% or higher.

For example, in a case where the crystal phase of the β-Ce₂Mo₃O₁₃ and a crystal phase of the γ-Ce₂Mo₃O₁₃ are contained in the crystal of the Ce-Mo-based composite oxide ceramic, the proportion of the crystal phase of the β-Ce₂Mo₃O₁₃ is preferably 32% or higher as described above. A method for obtaining the proportion of the crystal phase will be described later.

The amount of oxygen atom (O) contained in the Ce-Mo-based composite oxide ceramic may be or does not have to be based on the stoichiometric composition of the Ce-Mo-based composite oxide ceramic as long as the object of the present invention is achieved. That is, the Ce-Mo-based composite oxide ceramic may be a nonstoichiometric compound as long as the object of the present invention is achieved.

The Ce-Mo-based composite oxide ceramic may contain, for example, Ce(MoO₄)₂, Ce₂MoO₆, Ce₂(MoO₄)₃, Ce₂Mo₄O₁₅, Ce₆(MoO₄)₈(Mo₂O₇), Ce₈Mo₁₂O₄₉, or the like in addition to the Ce₂Mo₃O₁₃ as long as the object of the present invention is achieved.

The Ce-Mo-based composite oxide ceramic preferably has an Al content of 100 ppm or lower. The Al contained in the Ce-Mo-based composite oxide ceramic may be present at any location in the Ce-Mo-based composite oxide ceramic as long as the object of the present invention is achieved. However, the Al is preferably present in, for example, a crystal phase of the Ce-Mo-based composite oxide ceramic.

The Al content (ppm) of the Ce-Mo-based composite oxide ceramic is obtained by using, for example, an ICP atomic emission spectrophotometer (ICP).

Also, the Ce-Mo-based composite oxide ceramic may, in addition to the Al, contain Zr, Si, H, F, Ba, Zn, Mg, Fe, Y, and the like as unavoidable impurities or the like as long as the object of the present invention is achieved.

The Ce-Mo-based composite oxide ceramic may be a crystalline substance of a single crystal or a polycrystal. The crystal phase of the crystal may be a single phase or a combination of two or more different phases.

A method for manufacturing the Ce-Mo-based composite oxide ceramic is not particularly limited as long as the object of the present invention is achieved, and examples of the method include a solid-state reaction method. The method for manufacturing the Ce-Mo-based composite oxide ceramic is preferably a solid-state reaction method from the viewpoint of, for example, making it easy to adjust the Al content to a predetermined content.

The solid-state reaction method as a method for manufacturing the Ce-Mo-based composite oxide ceramic is exemplified below. The solid-state reaction method as a method for manufacturing the Ce-Mo-based composite oxide ceramic includes, for example, a compounding step, a drying step, and a calcination step.

The compounding step is a step of mixing a predetermined amount of a cerium compound and a predetermined amount of a molybdenum compound to obtain a mixture thereof.

The cerium compound is a compound containing cerium (Ce) necessary for manufacturing the Ce-Mo-based composite oxide ceramic, and examples of the cerium compound include CeO₂, cerium nitrate, cerium chloride, cerium sulfate, cerium hydroxide, cerium carbonate, cerium acetate, and the like. As the cerium compound, at least one type of cerium compound selected from the group consisting of CeO₂, cerium nitrate, cerium chloride, cerium sulfate, cerium hydroxide, cerium carbonate, and cerium acetate may be used. The cerium compound is preferably CeO₂.

The molybdenum compound is a compound containing molybdenum (Mo) necessary for manufacturing the Ce-Mo-based composite oxide ceramic, and examples of the molybdenum compound include MoO₃, MoO₂, MoO, Mo(OH)₃, Mo(OH)₅, and the like. As the molybdenum compound, at least one type of molybdenum compound selected from the group consisting of MoO₃, MoO₂, MoO, Mo(OH)₃, and Mo(OH)₅ may be used. The molybdenum compound is preferably MoO₃.

The mixing ratio of the cerium compound to the molybdenum compound is not particularly limited as long as the object of the present invention is achieved. However, the mixing ratio is preferably adjusted such that the molar ratio of Ce:Mo becomes 2:3 for reasons such as the reason that this adjustment makes it easy to assuredly form the β-Ce₂Mo₃O₁₃.

In the compounding step, an aluminum compound may be used as long as the Ce-Mo-based composite oxide ceramic has an Al content of 100 ppm or lower. In the case of the present embodiment, it is preferable that no aluminum compound is used in the compounding step. Examples of the aluminum compound include Al(NO₃)₃, Al₂O₃, aluminum sulfate, aluminum chloride, and the like.

In a case where Zr is contained in the Ce-Mo-based composite oxide ceramic, a zirconium compound may be used in the compounding step as long as the object of the present invention is achieved. Examples of the zirconium compound include zirconium chloride, zirconium hydroxide, zirconium carbonate, zirconium sulfate, zirconium acetate, and the like.

In a case where Si is contained in the Ce-Mo-based composite oxide ceramic, a silicon compound may be used in the compounding step as long as the object of the present invention is achieved. Examples of the silicon compound include silicon dioxide, silicon monoxide, silicon carbide, silicon nitride, and the like.

The compounding step is performed by, for example, putting the predetermined amount of the cerium compound and the predetermined amount of the molybdenum compound into a container formed from resin (resin pot), further putting a predetermined amount of a solvent such as a lower alcohol (ethanol) into the container, and using a cobble (e.g., a zirconia cobble) to mix these compounds for a predetermined time (e.g., 5 hours to 30 hours). Through such a compounding step, a wet mixture in the form of a slurry is obtained. For the mixing, a cobble formed from alumina is not used in order to inhibit entry of aluminum.

The drying step is a step of drying the wet mixture in the form of a slurry obtained after the compounding step. A method for drying the wet mixture is not particularly limited as long as the object of the present invention is achieved. Examples of the method include a drying method with use of a bain-marie, a drying method with use of a vibration dryer, a drying method with use of a spray dryer, and the like.

After the drying step, the wet mixture is dried into the form of a powder. The obtained mixture in the form of a powder (mixed powder) is in a state where the cerium compound in a solid phase and the molybdenum compound in a solid phase are mixed with each other.

The calcination step is a step of heating the mixed powder, obtained after the drying step, in a solid phase. For example, in the calcination step, the mixed powder is heated for 1 hour to 24 hours under a temperature condition of 400°C or higher and 650°C or lower. The calcination step does not have to be performed in a special synthetic air atmosphere and is performed in an ordinary air atmosphere. The calcination step is not intended for sintering the cerium compound, the molybdenum compound, or the like in the mixed powder.

Through the calcination step, a calcined powder (an example of the Ce-Mo-based composite oxide ceramic) formed from a reaction product of the cerium compound and the molybdenum compound is obtained.

The calcined powder may be, as necessary, subjected to granulation through spray drying or the like to be prepared in a granular form. Such a powder in a granular form may be used as the Ce-Mo-based composite oxide ceramic.

Alternatively, a sintered body obtained by firing and sintering the calcined powder may be used as the Ce-Mo-based composite oxide ceramic. For example, the calcined powder is compacted into a predetermined shape (e.g., a columnar shape, a disc shape, or the like) by using a designated press machine, and the obtained compacted product (green compact) is fired for 1 hour to 24 hours under a predetermined temperature condition (e.g., 400°C or higher and 650°C or lower) so as to be sintered, whereby a sintered body usable as the Ce-Mo-based composite oxide ceramic is obtained.

The firing step is a heating step for sintering the Ce-Mo-based composite oxide ceramic in the calcined powder and can be performed in an air atmosphere.

Alternatively, the Ce-Mo-based composite oxide ceramic of the present embodiment may be manufactured as appropriate by applying, for example, citric acid polymerization or hydrothermal synthesis described in International Publication WO2022/014631.

The Ce-Mo-based composite oxide ceramic of the present embodiment exhibits an antibacterial property (antibacterial activity) and an antiviral property (antiviral activity) in a pre-sintering state. In the same manner as before being sintered, the Ce-Mo-based composite oxide ceramic of the present embodiment exhibits the antibacterial property and the antiviral property also after being sintered. Such a Ce-Mo-based composite oxide ceramic can be used as an antibacterial and antiviral material having both the antibacterial property and the antiviral property.

The antibacterial property and the antiviral property of the Ce-Mo-based composite oxide ceramic can be evaluated according to, for example, a film cover method that conforms to JIS R 1756. For example, the virus reduction rate of the Ce-Mo-based composite oxide ceramic measured according to the film cover method after 24 hours elapse, is 99% or higher.

The form of the Ce-Mo-based composite oxide ceramic is not particularly limited and may be a desired form according to use as long as the object of the present invention is achieved. For example, the Ce-Mo-based composite oxide ceramic may be in the form of a powder or in a granular form obtained by granulating the powder through spray drying or the like. Alternatively, the Ce-Mo-based composite oxide ceramic may be used in the form of a green compact obtained by compacting the ceramic material in the form of a powder. Alternatively, the Ce-Mo-based composite oxide ceramic may be used in the form of a sintered body.

Alternatively, the Ce-Mo-based composite oxide ceramic may be used in a state of being applied on at least a part of a surface of an article. A material for forming the article on which the Ce-Mo-based composite oxide ceramic is to be applied is not particularly limited as long as the object of the present invention is achieved. Examples of the material include glass, ceramic, synthetic resins such as thermoplastic resin and thermosetting resin, rubbers (natural rubber and synthetic rubber), genuine leather (natural leather), synthetic leather, metal-based materials each made from a metal or an alloy, wood, paper, fiber, nonwoven fabric, silicon (silicon wafers and the like), carbon materials, minerals, gypsum, and the like.

Alternatively, the Ce-Mo-based composite oxide ceramic may be used in a state of being dispersed in a designated base material. The base material in which the Ce-Mo-based composite oxide ceramic is to be dispersed is not particularly limited as long as the object of the present invention is achieved. Examples of the base material include glass, ceramic, synthetic resins such as thermoplastic resin and thermosetting resin, rubbers (natural rubber and synthetic rubber), genuine leather (natural leather), synthetic leather, metal-based materials each made from a metal or an alloy, wood, paper, fiber, nonwoven fabric, silicon (silicon wafers and the like), carbon materials, minerals, gypsum, and the like.

Alternatively, the antibacterial and antiviral material formed from the Ce-Mo-based composite oxide ceramic may be used in the form of a slurry composition by being dispersed in a dispersion medium such as water, an alcohol (ethanol, isopropyl alcohol, or the like), or an organic solvent. Alternatively, the antibacterial and antiviral material may be used in the form of a coating agent containing the slurry composition.

Hereinafter, the present invention will be further described based on Examples. However, the present invention is not limited in any way by the Examples.

### [Example 1]

CeO₂ was prepared as a cerium compound, and MoO₃ was prepared as a molybdenum compound. Then, a raw material powder of the cerium compound and a raw material powder of the molybdenum compound were weighed out such that the molar ratio therebetween was 2:3 (Ce:Mo=2:3). The raw material powders having been weighed out were mixed together with a predetermined amount of ethanol for a predetermined time, and the obtained wet mixture was dried to obtain a mixed powder. Then, the mixed powder was heated in an air atmosphere under a temperature condition of 475°C for 1 hour to obtain a heated powder formed from a reaction product of the cerium compound and the molybdenum compound. In this manner, a Ce-Mo-based composite oxide ceramic in a particulate form (the form of a powder) in Example 1 was obtained.

### [Example 2]

CeO₂ was prepared as a cerium compound, and MoO₃ was prepared as a molybdenum compound. Furthermore, Al(NO₃)₃ was prepared as an aluminum compound. A raw material powder of the cerium compound and a raw material powder of the molybdenum compound were weighed out such that the molar ratio therebetween was 2:3 (Ce:Mo=2:3). Also, a raw material powder of the aluminum compound was weighed out such that the aluminum (Al) content was 50 ppm. The raw material powders having been weighed out were mixed together with the predetermined amount of ethanol for the predetermined time, and the obtained wet mixture was dried to obtain a mixed powder. Subsequently, a Ce-Mo-based composite oxide ceramic in a particulate form (the form of a powder) in Example 2 was produced according to the same procedure as the procedure in Example 1.

### [Example 3]

CeO₂ was prepared as a cerium compound, and MoO₃ was prepared as a molybdenum compound. Furthermore, Al(NO₃)₃ was prepared as an aluminum compound. A raw material powder of the cerium compound and a raw material powder of the molybdenum compound were weighed out such that the molar ratio therebetween was 2:3 (Ce:Mo=2:3). Also, a raw material powder of the aluminum compound was weighed out such that the aluminum (Al) content was 100 ppm. The raw material powders having been weighed out were mixed together with the predetermined amount of ethanol for the predetermined time, and the obtained wet mixture was dried to obtain a mixed powder. Subsequently, a Ce-Mo-based composite oxide ceramic in a particulate form (the form of a powder) in Example 3 was produced according to the same procedure as the procedure in Example 1.

### [Example 4]

CeO₂ was prepared as a cerium compound, and MoO₃ was prepared as a molybdenum compound. Furthermore, Al(NO₃)₃ was prepared as an aluminum compound. A raw material powder of the cerium compound and a raw material powder of the molybdenum compound were weighed out such that the molar ratio therebetween was 2:3 (Ce:Mo=2:3). Also, a raw material powder of the aluminum compound was weighed out such that the aluminum (Al) content was 150 ppm. The raw material powders having been weighed out were mixed together with the predetermined amount of ethanol for the predetermined time, and the obtained wet mixture was dried to obtain a mixed powder. Subsequently, a Ce-Mo-based composite oxide ceramic in a particulate form (the form of a powder) in Example 4 was produced according to the same procedure as the procedure in Example 1.

The proportions of β-Ce₂Mo₃O₁₃ and Al contents of the respective samples in Examples 1, 2, 3, and 4 and Comparative Example 1 are indicated in Table 1.

**[Table 1]**

| | PROPORTION OF β-Ce2Mo3O13 | Al CONTENT |
|---|---|---|
| EXAMPLE 1 | 100% | 0ppm |
| EXAMPLE 2 | 65% | 50ppm |
| EXAMPLE 3 | 32% | 100ppm |
| COMPARATIVE EXAMPLE 1 | 0% | 200ppm |
| EXAMPLE 4 | 20% | 150ppm |

### [Comparative Example 1]

A Ce-Mo-based composite oxide ceramic in a particulate form (the form of a powder) in Comparative Example 1 was produced according to the same method as the method in Example 2, except that the raw material powder of the aluminum compound was weighed out such that the aluminum (Al) content was 200 ppm.

### [Measurement and Evaluation]

### (Identification of Crystal Structure)

A crystal structure of each of the samples in Examples 1, 2, 3, and 4 and Comparative Example 1 was identified through powder X-ray diffraction (XRD). Measurement conditions were as follows.

### <Measurement Conditions>

Measurement device: powder X-ray diffraction device (device name "Smart lab" manufactured by Rigaku Corporation)
Detector: D/teX Ultra 250
Optical system: concentrated optical system of Bragg-Brentano type
X-ray output: 40 kV-30 mA
Step width: 0.0100°
Scan axis: 2θ/θ
Scan range: 10.00° to 80.00°

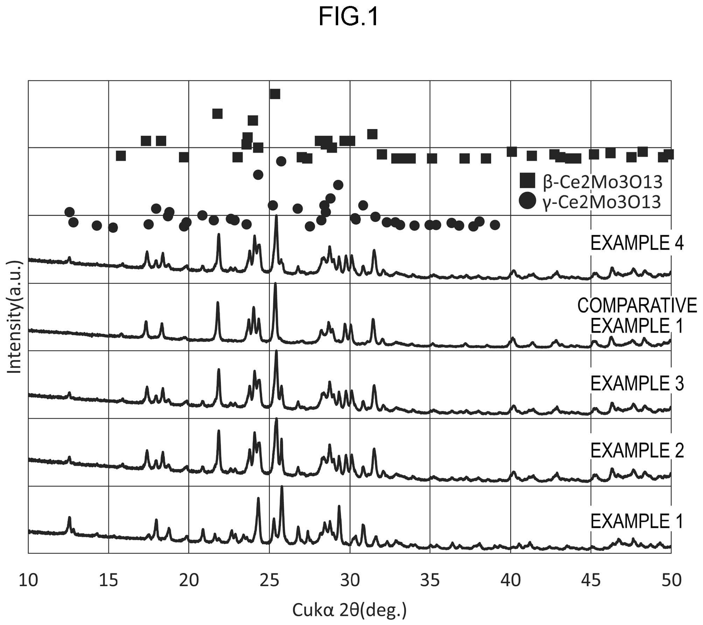

The measurement results (X-ray diffraction spectra) of the XRD are shown in FIG. 1. FIG. 1 shows X-ray diffraction spectra derived from the respective samples in Examples 1, 2, 3, and 4 and Comparative Example 1. Each of the diffraction spectra was subjected to normalization to, for example, eliminate unnecessary backgrounds.

As shown in FIG. 1, it was ascertained that, in the sample in Example 1, the crystal of the Ce-Mo-based composite oxide ceramic was composed only of the crystal phase of the β-Ce₂Mo₃O₁₃ (β-type: 100%) and contained substantially no crystal phase of γ-Ce₂Mo₃O₁₃.

Also, as shown in FIG. 1, it was ascertained that, in the sample in Example 3, 32% of the crystal of the Ce-Mo-based composite oxide ceramic was the crystal phase of the β-Ce₂Mo₃O₁₃, and the remainder (i.e., 68%) was a crystal phase of a γ-Ce₂Mo₃O₁₃. Likewise, it was ascertained that, in the sample in Example 2, the crystal of the Ce-Mo-based composite oxide ceramic was composed of 65% of the β-type crystal structure and 35% of the γ-type crystal structure, and, in the sample in Example 4, the crystal of the Ce-Mo-based composite oxide ceramic was composed of 20% of the β-type crystal structure and 80% of the γ-type crystal structure. The proportion of the crystal phase of the β-Ce₂Mo₃O₁₃ was obtained from the intensity ratio between a diffraction peak derived from the β-Ce₂Mo₃O₁₃ and a diffraction peak derived from the γ-Ce₂Mo₃O₁₃.

Meanwhile, it was ascertained that, in the sample in Comparative Example 1, the crystal of the Ce-Mo-based composite oxide ceramic was composed only of the crystal phase of the γ-Ce₂Mo₃O₁₃ and contained substantially no crystal phase of β-Ce₂Mo₃O₁₃.

### (Al Content)

In each of the samples in Examples 1, 2, 3, and 4 and Comparative Example 1, Al as a trace element and the like were detected through ICP atomic emission spectroscopy under the conditions described below. Then, an Al content (ppm) in oxide equivalent was obtained.

### <Measurement Conditions>

Measurement device: ICP-AES (inductively coupled plasma atomic emission spectrophotometer (model "iCAP-6500") manufactured by Thermo Fisher Scientific Inc.)
Sample pretreatment: thermolysis treatment with nitric acid (with hydrochloric acid added)

According to the results of the ICP atomic emission spectroscopy, the sample in Example 1 had an Al content not higher than a measurement lower limit, the sample in Example 3 had an Al content of 77 ppm, and the sample in Comparative Example 1 had an Al content of 193 ppm.

### (Evaluation of Water Resistance)

Each of the samples in Examples 1, 2, 3, and 4 and Comparative Example 1 was immersed in pure water for 10 days. After being immersed for 10 days, the sample was taken out from the pure water, and the crystal structure of this sample was identified through XRD according to the same method as the method for the non-immersed (pre-immersion) sample described above.

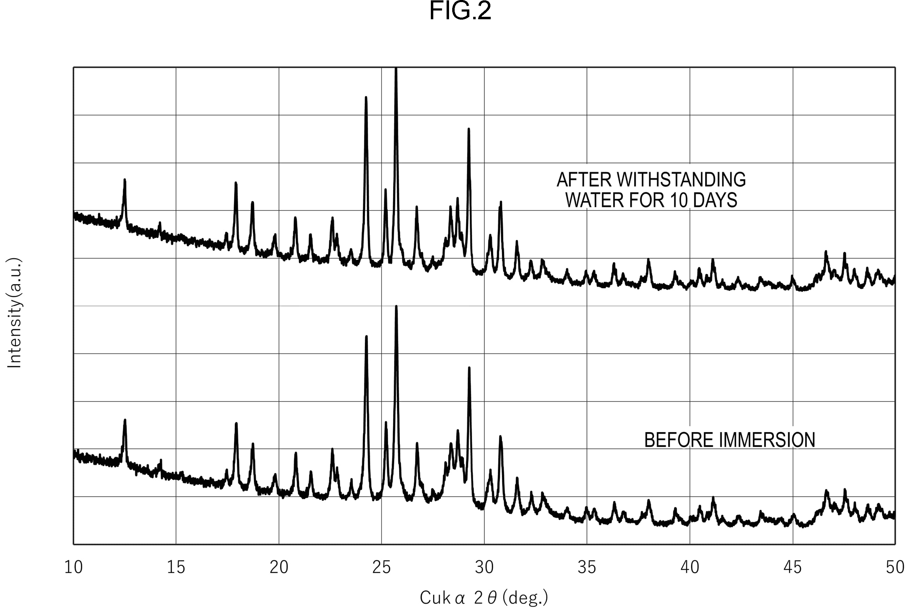

The measurement result of the post-immersion XRD in Example 1 is shown in FIG. 2. In FIG. 2, the measurement result of the pre-immersion XRD in Example 1 is also shown for comparison. Each of the diffraction spectra in FIG. 2 was subjected to normalization to, for example, eliminate unnecessary backgrounds. As shown in FIG. 2, it was ascertained that, in the case of the sample in Example 1, change in the diffraction spectrum from the pre-immersion state (non-immersed state) was not observed and the β-type crystal structure was maintained even after the sample was immersed in pure water for 10 days. That is, it was ascertained that the crystal structure (β-Ce₂Mo₃O₁₃) of the sample in Example 1 was stable with respect to water, and the sample in Example 1 had excellent water resistance.

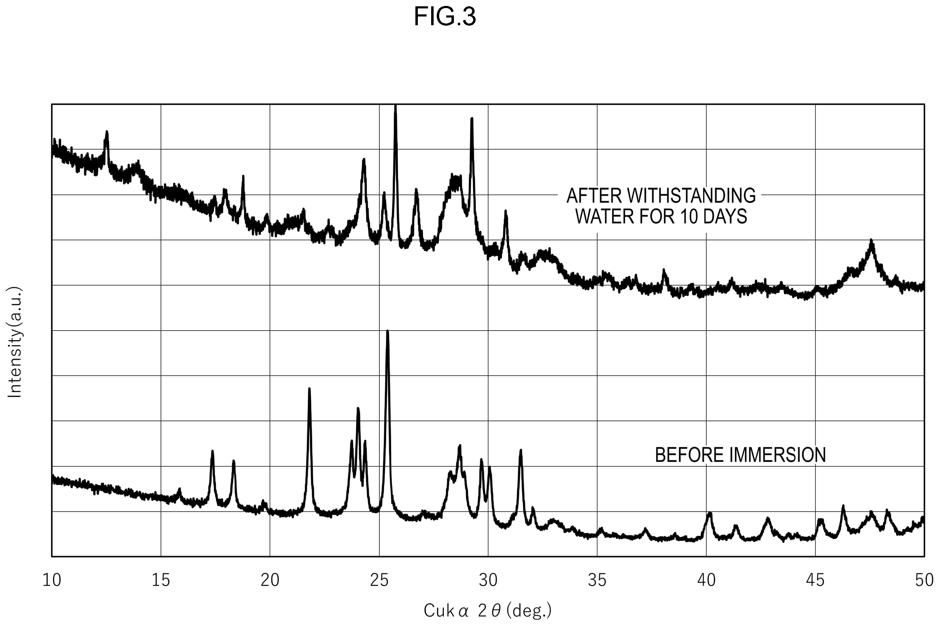

The measurement result of the post-immersion XRD in Comparative Example 1 is shown in FIG. 3. In FIG. 3 as well, the measurement result of the pre-immersion XRD in Comparative Example 1 is shown for comparison. Each of the diffraction spectra in FIG. 3 was subjected to normalization to, for example, eliminate unnecessary backgrounds. As shown in FIG. 3, in the case of the sample in Comparative Example 1, the crystal structure thereof was the γ-type crystal structure (diffraction spectrum) in the pre-immersion state (non-immersed state), but change in the diffraction spectrum was observed after the sample was immersed in pure water for 10 days. That is, it was ascertained that the crystal structure (γ-Ce₂Mo₃O₁₃) of the sample in Comparative Example 1 was unstable with respect to water, and the sample in Comparative Example 1 was inferior in water resistance.

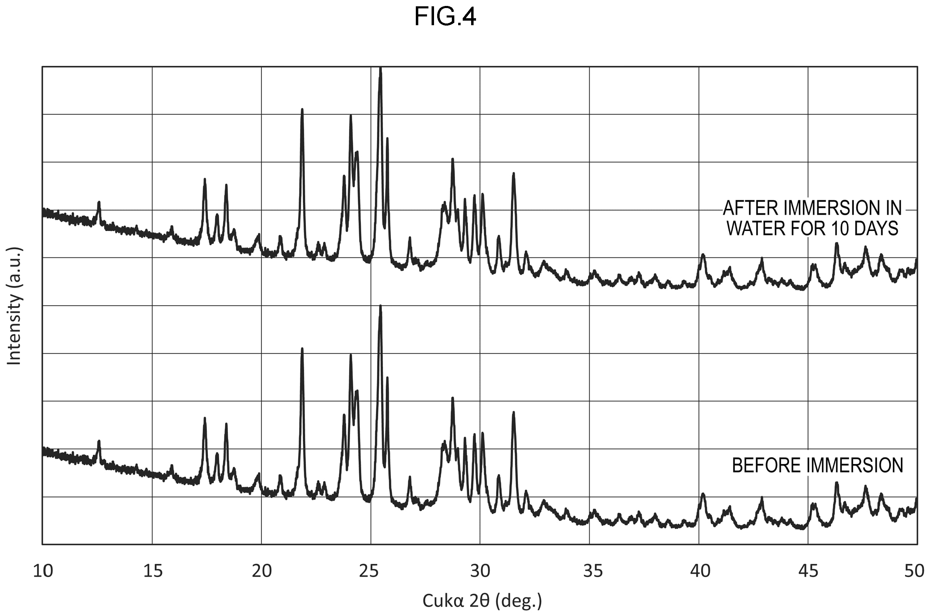

The measurement result of the post-immersion XRD in Example 2 is shown in FIG. 4. In FIG. 4, the measurement result of the pre-immersion XRD in Example 2 is also shown for comparison. Each of the diffraction spectra in FIG. 4 was subjected to normalization to, for example, eliminate unnecessary backgrounds. As shown in FIG. 4, it was ascertained that, in the case of the sample in Example 2, change in the diffraction spectrum from the pre-immersion state (non-immersed state) was not observed and the β-type crystal structure was maintained even after the sample was immersed in pure water for 10 days. That is, it was ascertained that the crystal structure (β-Ce₂Mo₃O₁₃) of the sample in Example 2 was stable with respect to water, and the sample in Example 2 had excellent water resistance.

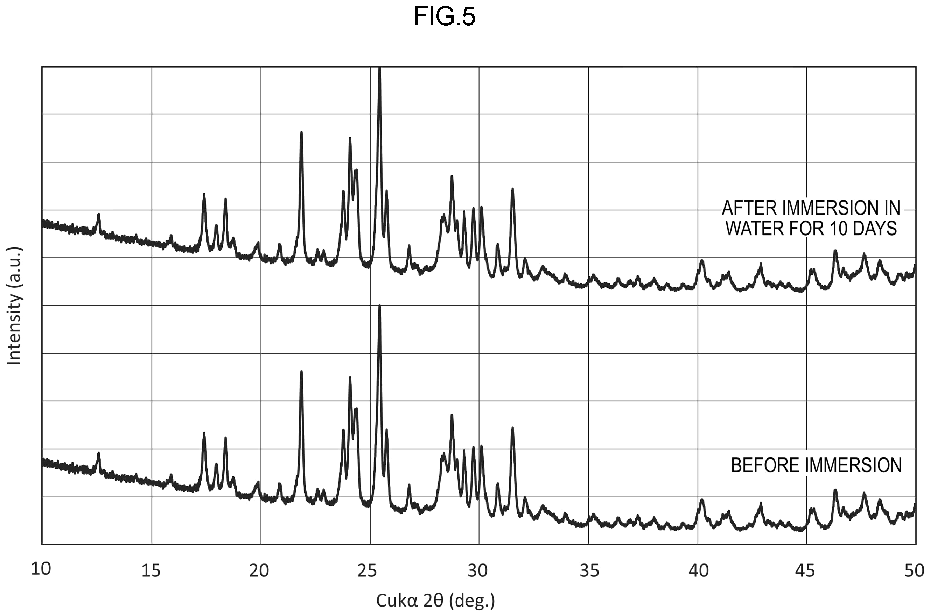

The measurement result of the post-immersion XRD in Example 3 is shown in FIG. 5. In FIG. 5, the measurement result of the pre-immersion XRD in Example 3 is also shown for comparison. Each of the diffraction spectra in FIG. 5 was subjected to normalization to, for example, eliminate unnecessary backgrounds. As shown in FIG. 5, it was ascertained that, in the case of the sample in Example 3, change in the diffraction spectrum from the pre-immersion state (non-immersed state) was not observed and the β-type crystal structure was maintained even after the sample was immersed in pure water for 10 days. That is, it was ascertained that the crystal structure (β-Ce₂Mo₃O₁₃) of the sample in Example 3 was stable with respect to water, and the sample in Example 3 had excellent water resistance.

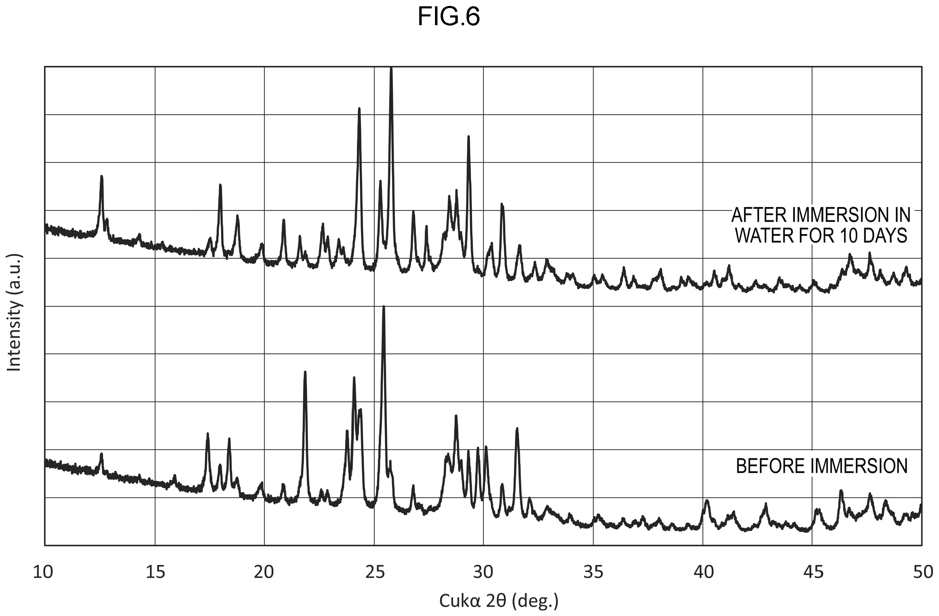

The measurement result of the post-immersion XRD in Example 4 is shown in FIG. 6. In FIG. 6, the measurement result of the pre-immersion XRD in Example 4 is also shown for comparison. Each of the diffraction spectra in FIG. 6 was subjected to normalization to, for example, eliminate unnecessary backgrounds. As shown in FIG. 6, it was ascertained that, in the case of the sample in Example 4, change in the diffraction spectrum from the pre-immersion state (non-immersed state) was not observed and the β-type crystal structure was maintained even after the sample was immersed in pure water for 10 days. That is, it was ascertained that the crystal structure (β-Ce₂Mo₃O₁₃) of the sample in Example 4 was stable with respect to water, and the sample in Example 4 had excellent water resistance.

### [Evaluation of Antiviral Activity]

The antiviral performance of each of the samples in Example 1 and Comparative Example 1 was evaluated through the film cover method. As a result, it was ascertained that the β-type sample in Example 1 had an antiviral performance equivalent to the antiviral performance of the γ-type sample in Comparative Example 1.

## Claims

1. An antibacterial and antiviral material formed from a Ce-Mo-based composite oxide ceramic containing β-Ce₂Mo₃O₁₃.

2. The antibacterial and antiviral material according to claim 1, wherein a proportion of a crystal phase of the β-Ce₂Mo₃O₁₃ in a crystal of the Ce-Mo-based composite oxide ceramic is 32% or higher.

3. The antibacterial and antiviral material according to claim 1 or 2, wherein the Ce-Mo-based composite oxide ceramic has an Al content of 100 ppm or lower.

4. A green compact comprising the Ce-Mo-based composite oxide ceramic according to claim 1 or 2, wherein the Ce-Mo-based composite oxide ceramic is in a form of a powder and has been compacted.

5. A sintered body comprising the Ce-Mo-based composite oxide ceramic according to claim 1 or 2, wherein the Ce-Mo-based composite oxide ceramic has been sintered.

6. An article comprising, on at least a part of a surface thereof, the antibacterial and antiviral material according to claim 1 or 2.

7. An article comprising:
the antibacterial and antiviral material according to claim 1 or 2; and
a base material in which the antibacterial and antiviral material has been dispersed.

8. A slurry composition comprising:
the antibacterial and antiviral material according to claim 1 or 2; and
a dispersion medium.

9. A coating agent comprising the slurry composition according to claim 8.
